# EUROPÄISCHE PATENTANMELDUNG

(11) **EP 2 039 636 A1**
(43) Veröffentlichungstag der Anmeldung: **25.03.2009**
(21) Anmeldenummer: 07018491.6
(22) Anmeldetag: 20.09.2007
(51) Int. Cl.: B65H 23/02

(54) **Verfahren und Vorrichtung zur Messung der Querlage einer fortlaufend transportierten Bahn**

(71) Anmelder: Fischer & Krecke GmbH, 33609 Bielefeld (DE)
(72) Erfinder: Büker, Gerhard, 33818 Leopoldshöhe (DE)
(74) Vertreter: Wiebusch, Manfred

(57) **Zusammenfassung**

Verfahren zur Messung der Querlage einer fortlaufend transportierten Bahn (10), die an vorbestimmten Querpositionen von Löchern (12) durchbrochen ist, **dadurch gekennzeichnet, daß** der Durchgang der Löcher (12) durch mindestens zwei Detektionslinien (30. 32, 34) detektiert wird, von denen eine erste rechtwinklig zur Transportrichtung (X) der Bahn verläuft und eine zweite (32) schräg dazu verläuft, und daß die Querlagen der Löcher (12) jeweils anhand der Dauer des Zeitintervalls bestimmt werden, das zwischen dem Durchgang des Lochs durch die erste und die zweite Detektionslinie vergeht.

## Beschreibung

Die Erfindung betrifft ein Verfahren zur Messung der Querlage einer fortlaufend transportierten Bahn, sowie eine Vorrichtung zur Durchführung dieses Verfahrens.

Verfahren und Vorrichtungen dieser Art finden beispielsweise in der Druckindustrie Anwendung, wenn die Bahn eines Bedruckstoffes, beispielsweise eines Verpackungsmaterials, mit einem Druckbild bedruckt werden soll, das präzise in Bezug auf die Längsränder der Bahn ausgerichtet ist. Bei bekannten Verfahren dieser Art wird zumeist die Querlage der Kante der Bahn mit Hilfe einer Lichtschranke optisch erfaßt. Bei einer Bahnabweichung in der einen oder anderen Richtung ändert sich dann die Bedämpfung der Lichtschranke. Diese Verfahren ermöglichen jedoch nur eine begrenzte Genauigkeit.

In gewissen Anwendungsfällen weist die zu bedruckende Bahn vorgestanzte Löcher auf, beispielsweise Trinkhalmlöcher bei Getränkeverpackungen, und das Druckbild sollte dann korrekt in Bezug auf diese Löcher ausgerichtet sein.

Aufgabe der Erfindung ist es, ein Verfahren anzugeben, das eine einfache und genaue Messung der Querlage einer fortlaufend transportierten Bahn erlaubt, die an vorbestimmten Querpositionen von Löchern durchbrochen ist.

Diese Aufgabe wird erfindungsgemäß dadurch gelöst, daß der Durchgang der Löcher durch mindestens zwei Detektionslinien detektiert wird, von denen eine erste rechtwinklig zur Transportrichtung der Bahn verläuft und eine zweite schräg dazu verläuft, und daß die Querlagen der Löcher jeweils anhand der Dauer des Zeitintervalls bestimmt werden, das zwischen dem Durchgang des Loches durch die erste und die zweite Detektionslinie vergeht.

Das Signal, das den Durchgang des Loches durch die schräg zur Transportrichtung verlaufende Detektionslinie anzeigt, tritt früher oder später auf, je nach dem, wie weit das Loch in der Richtung quer zur Transportrichtung in Bezug auf die Meßapparatur versetzt ist. Die rechtwinklig zur Transportrichtung verlaufende Detektionslinie liefert ein Referenzsignal, so daß sich die Querposition des Loches genau bestimmen läßt, indem die zwischen den beiden Signalen vergehende Zeitdauer gemessen und zur Transportgeschwindigkeit der Bahn in Beziehung gesetzt wird. Da der Durchgang des Loches an jeder beliebigen Stelle der Detektionslinien detektiert werden kann, erhält man ein vielwertiges Signal, das herkömmlichen Zwei- oder Dreipunktmessungen an Genauigkeit überlegen ist.

Eine Vorrichtung zur Durchführung des Verfahrens ist Gegenstand des unabhängigen Vorrichtungsanspruchs. Vorteilhafte Ausgestaltungen der Erfindung sind in den Unteransprüchen angegeben.

Wenn die Löcher, wie es in der Regel der Fall ist, in regelmäßigen Längsabständen in der Bahn angeordnet sind, kann durch Detektion der Durchgänge der Löcher durch die Detektionslinien auch die Transportgeschwindigkeit der Bahn bestimmt werden. In einer bevorzugten Ausführungsform sind jedoch zwei rechtwinklig zur Transportrichtung der Bahn verlaufende Detektionslinien in einem vorgegebenen Abstand zueinander vorgesehen, so daß die Transportgeschwindigkeit schon beim Durchgang eines einzigen Loches bestimmt werden kann. Die schräg verlaufende Detektionslinie ist dann vorzugsweise zwischen diesen beiden parallelen Detektionslinien angeordnet. Die Querposition des Loches läßt sich dann sehr einfach bestimmen, indem die Differenz oder das Verhältnis der Zeitdauern berechnet wird, die einerseits zwischen dem Durchgang des Loches durch die erste und die zweite Detektionslinie und andererseits dem Durchgang des Loches durch die zweite und die dritte Detektionslinie liegen.

Die Detektion des Lochdurchgangs erfolgt vorzugsweise optisch mit Hilfe von Lichtstrahlen, beispielsweise Laserstrahlen, die in Längsrichtung der jeweiligen Detektionslinie aufgefächert sind.

Der Sender und der Empfänger des optischen Detektors können auf entgegengesetzten Seiten der Bahn angeordnet sein. In dem Fall liefert der Empfänger nur dann ein Signal, wenn beim Durchgang des Loches ein Teil des Strahls durch das Loch hindurchtreten kann.

Umgekehrt können Sender und Empfänger auf derselben Seite der Bahn angeordnet sein und die Reflexion des Strahls an der Bahn messen. Beispielsweise kann der Intensitätsabfall des reflektierten Lichts bei Durchgang des Loches durch die Detektionslinie gemessen werden.

In einer besonders bevorzugten Ausführungsform sind der Sender und Empfänger jedoch so angeordnet, daß sie die Reflexion des Lichts an der Kante des Loches messen. Auch dabei können der Sender und der Empfänger wahlweise auf derselben oder auf verschiedenen Seiten der Bahn angeordnet sein.

Bei ausgedehnten Löchern und insbesondere bei Detektion der Reflexion an der Kante des Loches ist die genaue Länge der Zeitintervalle, die zwischen den einzelnen Detektionsereignissen liegen, auch von der Geometrie des Loches abhängig. Dieser Effekt kann jedoch rechnerisch korrigiert werden.

Im folgenden wird ein Ausführungsbeispiel anhand der Zeichnung näher erläutert.

### Es zeigen:

- Fig. 1: einen schematischen Grundriß einer Vorrichtung zur Detektion der Querposition eines Loches in einer Bahn;
- Fig. 2: eine Seitenansicht zu Fig. 1, mit im Längsschnitt dargestellter Bahn;
- Fig. 3 und 4: Zeitdiagramme zur Erläuterung des Meßverfahrens gemäß der Erfindung;
- Fig. 5: ein Diagramm zur Erläuterung einer Korrektur für die Geometrie des Loches; und
- Fig. 6: ein Blockdiagramm einer Vorrichtung zur Messung der Querlage der Bahn.

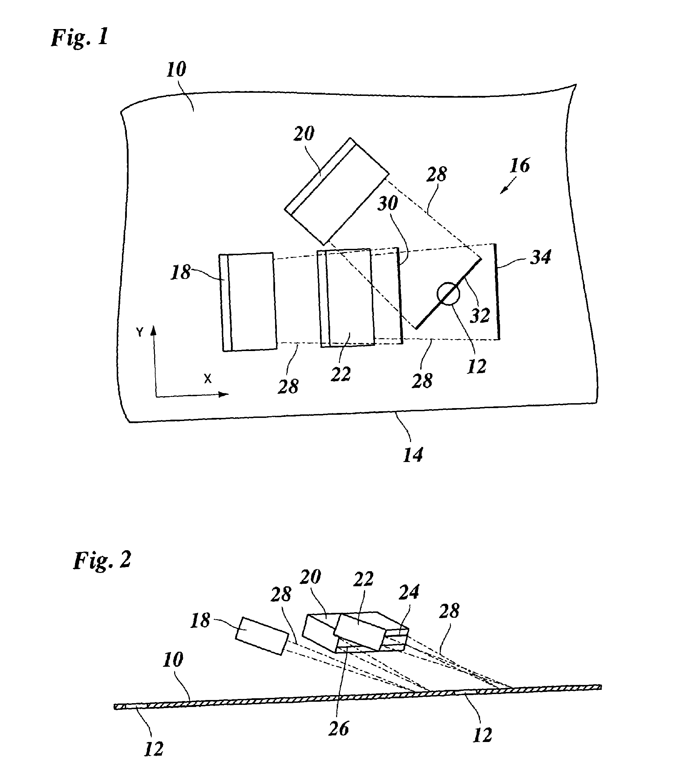

In Fig. 1 ist ein Ausschnitt aus einer Bahn 10 dargestellt, die, beispielsweise in einer Druckmaschine, fortlaufend mit konstanter Geschwindigkeit in der Richtung X transportiert wird. Beispielsweise kann es sich bei der Bahn 10 um eine flüssigkeitsdicht beschichtete Pappe für Getränkeverpackungen wie Fruchtsaft oder Milch handeln. In dem Fall weist die Bahn vorgestanzte Löcher 12 auf, beispielsweise Trinkhalmlöcher für Fruchtsaftpackungen oder Ausgußlöcher für Milchverpackungen. Diese Löcher 12 sind in gleichmäßigen Längsintervallen in der Bahn angeordnet und haben einen genau definierten Durchmesser sowie einen genau definierten Abstand zur längsverlaufenden Kante 14 der Bahn. Durch Messung der Querposition der Löcher 12, d.h., der Position in der Richtung Y in Fig. 1, ist es daher möglich, die Querlage der Bahn 10 zu messen und dann die Bahn über einen Verstellrahmen so zur Druckmaschine einzustellen, daß das Druckbild präzise zu der Lage der Löcher 12 paßt.

Zur Bestimmung der Querposition der Löcher 12 dient im gezeigten Beispiel eine optische Meßvorrichtung 16 mit drei im wesentlichen baugleichen, jedoch unterschiedlich in Bezug auf die Bahn 10 angeordneten optischen Detektoren 18, 20 und 22. Wie deutlicher in Fig. 2, insbesondere anhand des Detektors 20, zu erkennen ist, weist jeder Detektor einen in Breitenrichtung ausgedehnten optischen Sender 24 und einen entsprechend ausgedehnten, parallel dazu verlaufenden optischen Empfänger 26 auf. Der Sender 24 emittiert einen in der Breite aufgefächerten, in der Dicke jedoch scharf auf die Bahn 10 fokussierten Laserstrahl 28. Jeder der Laserstrahlen 28 der drei Detektoren zeichnet somit eine Detektionslinie 30, 32 bzw. 34 auf die Oberfläche der Bahn 10, wie in Fig. 1 zu erkennen ist.

Die vom Detektor 18 erzeugte erste Detektionslinie 30 und die vom Detektor 22 erzeugte dritte Detektionslinie 34 verlaufen in Y-Richtung, also quer zur Transportrichtung der Bahn 10, während die vom Detektor 20 erzeugte zweite Detektionslinie 32 zwischen diesen beiden liegt und mit ihnen einen Winkel von 45° bildet.

Die Empfänger 26 der drei Detektoren sind empfindlich für Licht, das von der jeweils zugehörigen Detektionslinie 30, 32 bzw. 34 reflektiert wird.

Das Meßprinzip der Vorrichtung soll zunächst mit Bezug auf Fig. 1 unter der vereinfachenden Annahme erläutert werden, daß die Ausdehnung und Form des Loches 12 vernachlässigbar ist und daß die Empfänger 26 jedes Detektors in dem Augenblick ein Signal erzeugen, in dem das Loch 12 die betreffende Detektionslinie passiert und dadurch die Intensität des reflektierten Lichtes abnimmt.

In der in Fig. 1 dargestellten Situation erzeugt somit gerade der Detektor 20 ein Signal, weil das Loch 12 dessen Detektionslinie 32 passiert. Außerdem liegt in diesem Beispiel das Loch 12 in der Y-Richtung gesehen mittig in Bezug auf die Detektoranordnung, d.h., in Bezug auf das Muster der Detektionslinien 30, 32, 34. Diese Situation läßt sich bei einer Auswertung der Signale der Detektoren 18, 20, 22 daran erkennen, daß die Zeit, die zwischen dem Signal des ersten Detektors 18 und dem Signal des zweiten Detektors 20 vergeht, genauso lang ist wie die Zeit zwischen dem Signal des zweiten Detektors 20 und dem Signal des dritten Detektors 22.

Wenn dagegen die Bahn 10 und damit auch das Loch 12 in Bezug auf die Meßanordnung in Y-Richtung (nach oben in Fig. 1) versetzt wäre, so würde das Loch 12 die schräge Detektionslinie 32 später erreichen, und das erste Zeitintervall wäre verlängert, während das zweite Zeitintervall entsprechend verkürzt wäre. Auf diese Weise läßt sich durch Vergleich der Zeitintervalle die Querposition (Y-Koordinate) des Loches 12 bestimmen. Im Prinzip brauchen dazu nur der Abstand zwischen den beiden Detektionslinien 30 und 34 und der Winkel bekannt zu sein, den die zweite Detektionslinie 32 mit den beiden anderen Detektionslinien 30, 34 bildet.

Im folgenden soll nun eine Verfeinerung des Verfahrens beschrieben werden, bei der die Ausdehnung des Loches 12 nicht vernachlässigt wird. Die Laserstrahlen 28 treffen, wie Fig. 2 zeigt, in einem relativ spitzen Winkel auf die Bahn 10, und die Empfänger 26 sind so angeordnet, daß sie speziell für das Licht empfindlich sind, das von der Kante des Loches 12 reflektiert wird, wenn dieses die Detektionslinie passiert.

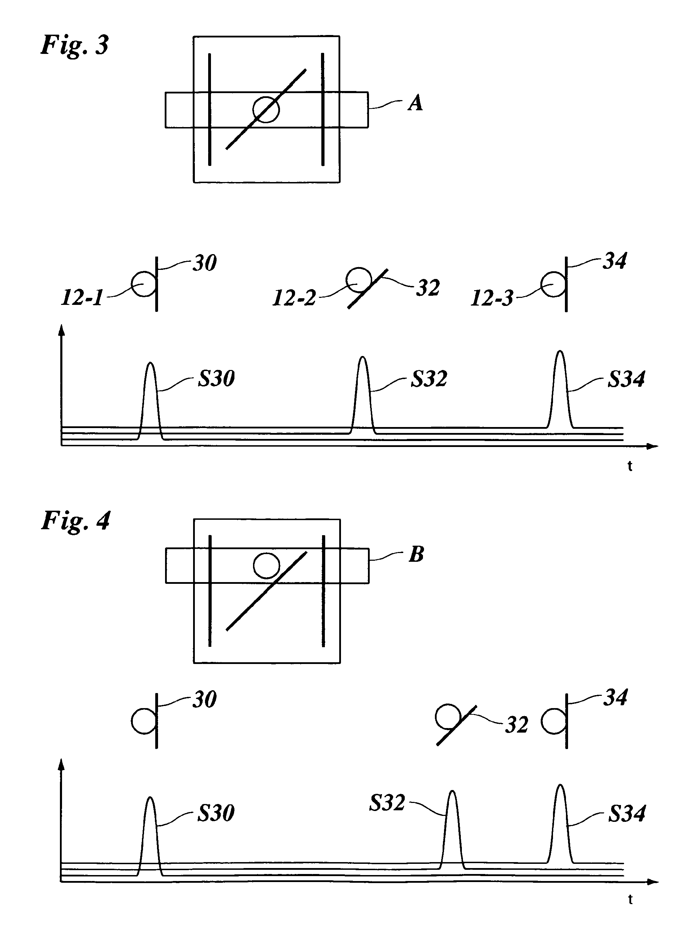

In Fig. 3 sind die Signale der drei Detektoren 18, 20 und 22 in Abhängigkeit von der Zeit t als Kurven S30, S32 und S34 dargestellt. Jede Kurve hat genau dann einen Ausschlag, wenn der in Richtung des betreffenden Detektors reflektierende Rand des Loches 12 die betreffende Detektionslinie passiert. Dies wird in Fig. 3 durch ein Schaubild über den Kurven S30, S32 und S34 illustriert. Wie weiter durch ein Übersichtsdiagramm verdeutlicht wird, zeigt das Schaubild einen schmalen Ausschnitt A der Detektionslinien 30, 32 und 34. Ferner ist über jedem Signalausschlag die Position 12-1, 12-2 bzw. 12-3 des Loches 12 relativ zu den Detektionslinien zum Zeitpunkt des betreffenden Ausschlags dargestellt. In Fig. 3 liegt das Loch in Y-Richtung etwa auf der Mitte der Detektoranordnung, so daß die Ausschläge der Signale S30, S32 und S34 etwa gleiche Abstände haben.

Zum Vergleich zeigt Fig. 4 die Situation, in der das Loch in Y-Richtung (nach oben in Fig. 1) versetzt ist (siehe Ausschnitt B) und deshalb die schräge Detektionslinie 32 erst zu einem späteren Zeitpunkt erreicht. Dementsprechend ist hier der Ausschlag der Kurve S32 verzögert.

Um jedoch die genaue Y-Position des Loches zu ermitteln, muß berücksichtigt werden, daß die Ausschläge der Detektoren nicht dann erfolgen, wenn die Mitte des Loches die Detektionslinie passiert, sondern vielmehr dann, wenn der Rand des Loches die Detektionslinie passiert. Die Signale der Detektoren 18 und 22 treten deshalb jeweils etwas früher auf, doch ist diese Voreilung für beide Detektoren die gleiche.

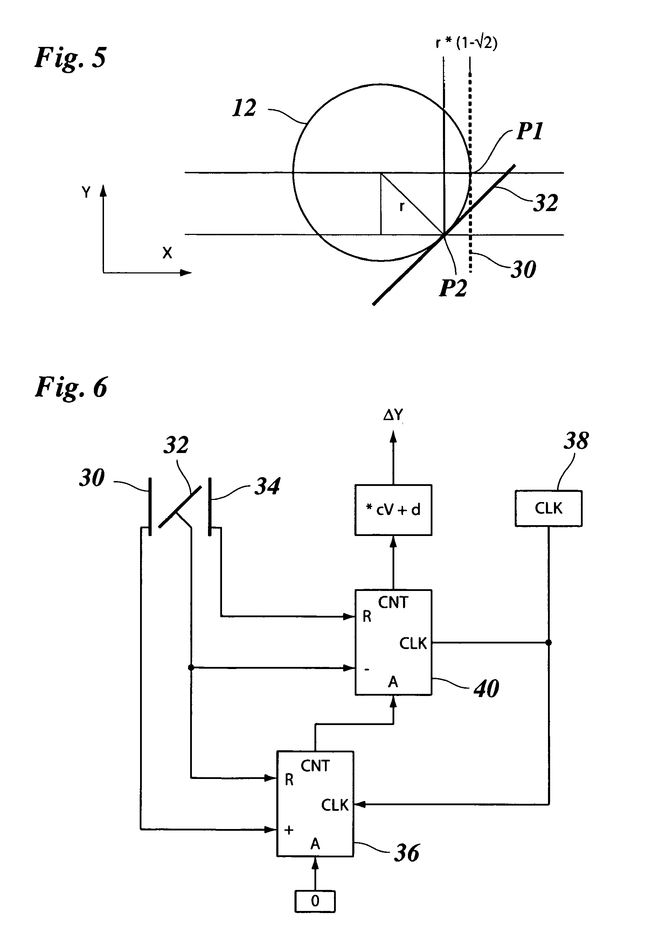

Bei dem Signal des Detektors 20 ist hingegen auch die Schrägstellung der zugehörigen Detektionslinie 32 zu berücksichtigen. Dies ist in Fig. 5 dargestellt. Wie durch die gestrichelt eingezeichnete Detektionslinie 30 verdeutlicht wird, erfassen die Detektoren 18 und 22 einen Punkt P1 auf dem Rand des Loches 12, während der Detektor 20 (Detektionslinie 32) einen Punkt P2 erfaßt. Der Abstand zwischen diesen beiden Punkten in X-Richtung beträgt r*(1-√2). wenn r der Radius des Loches 12 ist. Dies führt dazu, daß das Signal des Detektors 20 um eine diesem Versatz entsprechende Dauer verzögert ist, was wegen der Neigung der Detektionslinie 32 von 45° als Versatz um eben diesen Betrag in Y-Richtung interpretiert wird. Auf diese Weise läßt sich eine Korrektur errechnen, die zu der ermittelten Querposition addiert werden muß.

In Fig. 6 ist die Meßvorrichtung 16 als Blockdiagramm dargestellt. Die Detektoren 18, 20 und 22 sind hier durch die zugehörigen Detektionslinien 30, 32 und 34 symbolisiert. Das Signal von der Detektionslinie 30 gelangt an einen Eingang "+" eines ersten Zählers 36 und bewirkt, daß ein Anfangswert "A" dieses Zählers auf null gesetzt wird und der Zähler dann beginnt, Taktimpulse "CLK" eines Taktgenerators 38 (positiv) zu zählen. Wenn das Loch die Detektionslinie 32 erreicht, gelangt das Signal von dieser Detektionslinie an einen Eingang "R" des Zählers 36 und bewirkt, daß der Zähler angehalten wird und der Zählerstand "CNT" ausgegeben wird. Gleichzeitig gelangt das Signal von der Detektionslinie 32 an einen Eingang "-" eines zweiten Zählers 40 und bewirkt dort, daß der Zählerstand des ersten Zählers 36 als Anfangswert "A" übernommen wird. Der Zähler 40 zählt dann von diesem Anfangswert aus die Taktimpulse des Taktgenerators 38 negativ, bis schließlich das Signal von der Detektionslinie 34 an den Eingang "R" des Zählers 40 gelangt und bewirkt, daß der Zähler angehalten und der Zählerstand "CNT" ausgegeben wird.

Wenn das Loch 12 mittig in Bezug auf die Meßanordnung liegt, ist in diesem Augenblick wieder der Zählerstand "null" erreicht (abgesehen von den Korrekturen gemäß Fig. 5). Ein zu positiven oder negativen Werten von null abweichender Zählerstand zeigt an, daß die Lage des Loches 12 in Y-Richtung von der Mitte der Meßanordnung abweicht. Das Ausmaß der Abweichung AY kann berechnet werden, indem der Zählerstand mit der Transportgeschwindigkeit V der Bahn 10 und einer Konstanten c multipliziert wird, die zur Periodendauer des Taktgenerators 38 proportional ist, und indem zu dem Ergebnis die gemäß Fig. 5 berechnete Korrektur d addiert wird.

Die Zykluszeit des Taktgenerators 38 kann beispielsweise in der Größenordnung von 1 µs liegen und kann ihrerseits in Abhängigkeit von der Transportgeschwindigkeit V der Bahn variiert werden, so daß bei höherer Bahngeschwindigkeit eine entsprechend höhere räumliche Auflösung erreicht wird.

## Patentansprüche

1. Verfahren zur Messung der Querlage einer fortlaufend transportierten Bahn (10), die an vorbestimmten Querpositionen von Löchern (12) durchbrochen ist, **dadurch gekennzeichnet, daß** der Durchgang der Löcher (12) durch mindestens zwei Detektionslinien (30, 32, 34) detektiert wird, von denen eine erste rechtwinklig zur Transportrichtung (X) der Bahn verläuft und eine zweite schräg dazu verläuft, und daß die Querlagen (AY) der Löcher (12) jeweils anhand der Dauer des Zeitintervalls bestimmt werden, das zwischen dem Durchgang des Lochs durch die erste und die zweite Detektionslinie vergeht.

2. Verfahren nach Anspruch 1, **dadurch gekennzeichnet, daß** eine dritte rechtwinklig zur Transportrichtung der Bahn verlaufende Detektionslinie (34) in Abstand zu der ersten Detektionslinie (30) angeordnet ist und daß die zweite, schräg verlaufende Detektionslinie (32) zwischen diesen beiden angeordnet ist und daß auch die Dauer des Zeitintervalls bestimmt wird, das zwischen dem Durchgang des Loches (12) durch die zweite Detektionslinie (32) und die dritte Detektionslinie (34) vergeht.

3. Verfahren nach Anspruch 2, **dadurch gekennzeichnet, daß** die Dauern der Zeitintervalle voneinander subtrahiert werden.

4. Verfahren nach einem der vorstehenden Ansprüche, **dadurch gekennzeichnet, daß** die Detektionslinien (30, 32, 34) optisch auf die Bahn (10) projiziert werden und daß das von den Löchern (12) durchgelassene und/oder von der Bahn (10) reflektierte Licht detektiert wird.

5. Verfahren nach Anspruch 4, **dadurch gekennzeichnet, daß** das Licht schräg auf die Bahn gerichtet wird und das von den Rändern der Löcher (12) reflektierte Licht detektiert wird.

6. Vorrichtung zur Messung der Querlage einer fortlaufend transportierten Bahn (10), die an vorbestimmten Querpositionen von Löchern (12) durchbrochen ist, **gekennzeichnet durch** mindestens zwei optische Detektoren (18, 20, 22), die den Durchgang der Löcher (12) **durch** Detektionslinien (30, 32, 34) detektieren, von denen mindestens eine rechtwinklig zur Transportrichtung (X) der Bahn (10) verläuft, während die zweite schräg dazu verläuft, und **durch** eine Auswerteeinrichtung (36, 38, 40), die anhand der Signale der Detektoren (18, 20, 22) die Dauer des Zeitintervalls zwischen dem Durchgang eines Loches (12) **durch** die erste Detektionslinie (30) und dem Durchgang dieses Loches **durch** die zweite Detektionslinie (32) bestimmt und daraus die Querposition (ΔY) des Loches relativ zu den Detektoren berechnet.

7. Vorrichtung nach Anspruch 6, **dadurch gekennzeichnet, daß** ein dritter optischer Detektor (22), die den Durchgang der Löcher (12) durch eine dritte Detektionslinie (34) detektieren, die parallel zu der ersten Detektionslinie (30) verläuft, und daß die Auswerteeinrichtung (36, 38, 40) auch die Dauer des Zeitintervalls zwischen dem Durchgang eines Loches (12) durch die zweite Detektionslinie (30) und dem Durchgang dieses Loches durch die dritte Detektionslinie (34) bestimmt.

8. Vorrichtung nach Anspruch 7, **gekennzeichnet durch** einen ersten Zähler (36), der Taktimpulse eines Taktgenerators (38) zählt, um die Dauer des Zeitintervalls zwischen dem Durchgang des Loches **durch** die erste Detektionslinie (30) und die zweite Detektionslinie (32) zu bestimmen, und einen zweiten Zähler (40), der ab dem Durchgang des Loches **durch** die zweite Detektionslinie (32) den Zählerstand des ersten Zählers (36) im Takt des Taktgenerators (38) abzählt, bis das Loch die dritte Detektionslinie (34) passiert.
